# EUROPEAN PATENT APPLICATION

(11) **EP 2 169 284 A1**
(43) Date of publication of application: **31.03.2010**
(21) Application number: 08777894.0
(22) Date of filing: 04.07.2008
(51) Int. Cl.: F16J 15/10, F16L 23/16

(54) **PACKING FOR FOOD PROCESSING PLANT, PIPE JOINT STRUCTURE FOR FOOD PROCESSING PLANT, AND O-RING FOR FOOD PROCESSING PLANT**

(30) Priority: 09.07.2007 JP 2007005255 U; 31.08.2007 JP 2007006773 U; 11.12.2007 JP 2007009519 U
(71) Applicant: Aram Corporation, 3-10, Tenma 2-Chome, Kita-ku Osaka-shi, Osaka 530-0043 (JP)
(72) Inventor: YOSHITOMI,Shingo, Ikeda-shi Osaka 563-0017 (JP)
(74) Representative: Bongiovanni, Simone
(86) International application number: PCT/JP2008/062179
(87) International publication number: WO 2009/008369

(57) **Abstract**

The present invention relates to a gasket for a food processing plant, a piping joint structure for a food processing plant using the gasket and an O-ring for a food processing plant.

## Description

### TECHNICAL FIELD

The present invention relates to a gasket for a food processing plant, a piping joint structure for a food processing plant using the gasket and an O-ring for a food processing plant.

### BACKGROUND ART

A gasket material, an O-ring and a sealing material are produced by processing such as punching from a sheet-shaped rubber material processed with press vulcanization. A rubber used as a raw material mainly includes an oil-proof NBR and additionally, rubbers such as SBR, NR, CR, EPDM, 11R and FR and Si for specific use. Further, the rubber is roughly divided into those used for one unnecessary for oil resistance, those used for one superior in oil resistance, those used for one superior in heat resistance and cold resistance and those used for one superior in acid resistance and alkali resistance in accordance with a use purpose, depending on necessity of the gasket material and the sealing material.

Further, there are also those in which magnetic powder is mixed into a rubber material making surface pressure distribution be constant for improving sealing property and adhesiveness of an iron material brought in contact with a sealing surface is improved.

Usually, a gasket sealing material mixing magnetic powder in a rubber is produced by mixing the magnetic powder upon kneading the rubber when a rubber material is mixed with the magnetic powder, carrying out the press processing of the mixture and carrying out punching processing from this, but there are generated problems that when a gasket and a sealing material in which magnetic powder other than black iron oxide powder is mixed are used for a piping joint, rust is generated from the sealing material to cause blocking, the sealing material is magnetized, and grime rust and iron abrasion powder in fluid flowing in a cooling channel and a lubricant channel adheres on the sealing material to narrow the channels and gaps between the joints are easily rusted.

Therefore, in the invention described in Japanese Unexamined Patent Publication No. 5-172253, in a disk-shaped gasket sealing material that is prepared by filling powder in a mold in which a disk-shaped cavity is formed to be molded, rubber particles including magnetic powder are filled so as to be brought in contact with the bottom surface and outer peripheral surface of the disk-shaped cavity, on the other hand, a rubber material is filled so as to be brought in contact with the upper surface and inner peripheral surface and they are integrally molded.

With such a composition, the invention described in Japanese Unexamined Patent Publication No. 5-172253 is that the either of the front or rear surface and the outer peripheral surface in the gasket material are a magnetic sealing layer including magnetic powder and since the inner peripheral surface is made of a usual rubber layer, grime rust and iron abrasion powder in fluid do not adhere.

### DISCLOSURE OF INVENTION

As described above, a technical object of gaskets for sealing piping joints used in the so-called general pipes for fuel, lubricant, cooling water and vapor of an internal combustion engine, a vapor plant for electric power generation and a plant for atomic force is to improve sealing property. However, it is required that foreign articles associated with local disintegration caused by aging deterioration of gaskets and O-rings are not contaminated in the gaskets and O-rings applied for piping joints for a food processing plant that are used for food processing apparatuses such as drinking water, alcoholic beverage, sweet cocking rice wine, soy sauce, sauce, vinegar and tomato sauce, more than the sealing property required for the gaskets and O-rings applied for the above-mentioned joints for general piping.

However, in a case of a food processing plant, the plant is periodically stopped, the presence of the aging deterioration of gaskets is visually confirmed by maintenance and checking of piping and joints, and the foreign articles are removed with a strainer provided at the piping system, but there are problems that when a mesh is large, the foreign articles pass through the mesh and the contamination of the foreign articles is inevitable and when the mesh is small, the mesh becomes a resistance of fluid flowing in the piping and additionally the mesh is clogged.

Accordingly, it is an object of the present invention to provide a gasket and an O-ring applied for a piping joint for a food processing plant not being the resistance of fluid flowing in the piping, and not provoking the clogging of the mesh and ensuring removal of the foreign articles associated with local disintegration caused by the aging deterioration of the gasket.

Further, it is the object of the present invention to provide an O-ring applied for a piping joint for a food processing plant not generating a gap between an installation groove and the O-ring even if there are deviations in finishing dimension upon processing of the O-ring and a flange, and shrinkage caused by fatigue during the long periodical use of the O-ring.

A first aspect of the present invention is a gasket for a food processing plant having an O-ring and ring portions integrally formed with the O-ring along both sides of an inner periphery and an outer periphery of the O-ring, the gasket comprising:
a rubber; and
black iron oxide powder homogeneously mixed in the rubber.

Further, a compounding rate of the black iron oxide powder to the rubber is preferably 20 to 40 % by weight.

Further, a particle diameter of the black iron oxide powder is preferably 0.1 to 1 µm.

A second aspect of the present invention is a piping joint structure for a food processing plant comprising:
two adjacent pipings of at least 2 or 3 pipings;
joints provided at the respective terminal portions of the two adjacent pipings; and
the gaskets which are sandwiched between the joints,
wherein the O-ring of the gaskets is fitted in a groove provided substantially in a circular shape on a facing surface of the joint and the ring portion is sandwiched by the facing surface of the joints.

A third aspect of the present invention is an O-ring for a food processing plant comprising:
a rubber or PTFE; and black iron oxide powder mixed in the rubber or PTFE.

Further, a compounding rate of the black iron oxide powder to the rubber or PTFE is preferably 20 to 40 % by weight.

Further, a particle diameter of the black iron oxide powder is preferably 0.1 to 1 µm.

A fourth aspect of the present invention is an O-ring for a food processing plant mixing black iron oxide powder in a ring body comprising the rubber or PTFE,
wherein a cross sectional shape of the ring body exhibits a rectangular shape.

Further, a compounding rate of the black iron oxide powder to the rubber or PTFE is 20 to 40 % by weight.

Further, a particle diameter of the black iron oxide powder is 0.2 to 1 µm.

### BRIEF DESCRIPTION OF DRAWINGS

Fig. 1 is a cross sectional explanatory view showing one example of a gasket of the present invention.
Fig. 2 is an explanatory view showing a piping joint structure for a food processing plant in which the gasket of Fig. 1 is used.
Fig. 3 is an explanatory view showing one example of an O-ring of the present invention.
Fig. 4 is an explanatory view showing a piping joint structure for a food processing plant in which the O-ring of Fig. 3 is used.
Fig. 5(a) is an explanatory view showing one example of the O-ring of the present invention and Fig. 5(b) is a cross sectional explanatory view taken along line A-A of Fig. 5(a).
Fig. 6 is an explanatory view showing a piping joint structure for a food processing plant in which the O-ring of Fig. 5 is used.
Fig. 7 is an explanatory view showing other piping joint structure for a food processing plant in which the O-ring of Fig. 5 is used.
Figs. 8(a) and 8(b) are explanatory views showing joint means of the O-ring of the present invention.
Fig. 9 is a cross sectional view for illustrating the joint means of the O-ring of the present invention.
Fig. 10 is a view showing a relation between sorbability and an iron powder compounding rate of an EPDM rubber with iron powder.

### EXPLANATION OF SYMBOLS

- 1: Gasket
- 1a, 11, 12: O-ring
- 11a, 12a: Ring body
- 1b, 1c: Ring portion
- 2: Joint means
- 21: First joint portion
- 22: Second joint portion
- A: Shaft
- B: Bolt
- N: Nut
- F: Black iron oxide powder
- f1, f2: Flange joint (connection fitting)
- g: Groove
- P1, P2: Piping

### BEST MODE FOR CARRYING OUT THE INVENTION

Referring to the attached drawings, a gasket for a food processing plant (hereinafter, called as the gasket) and a piping joint structure for a food processing plant using the gasket of the present invention are specifically illustrated below.

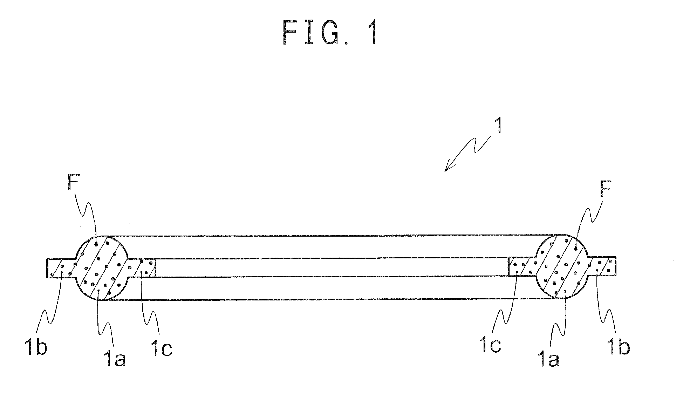

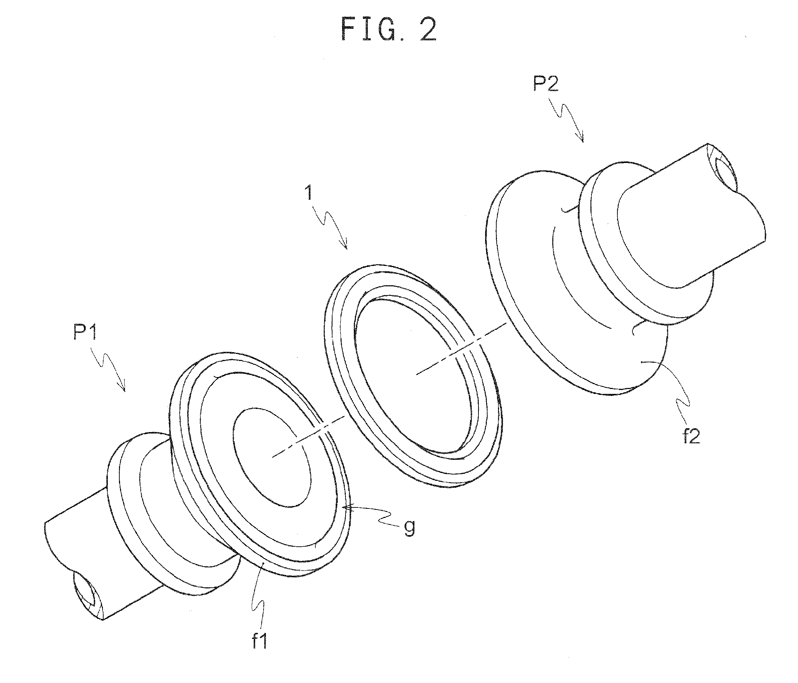

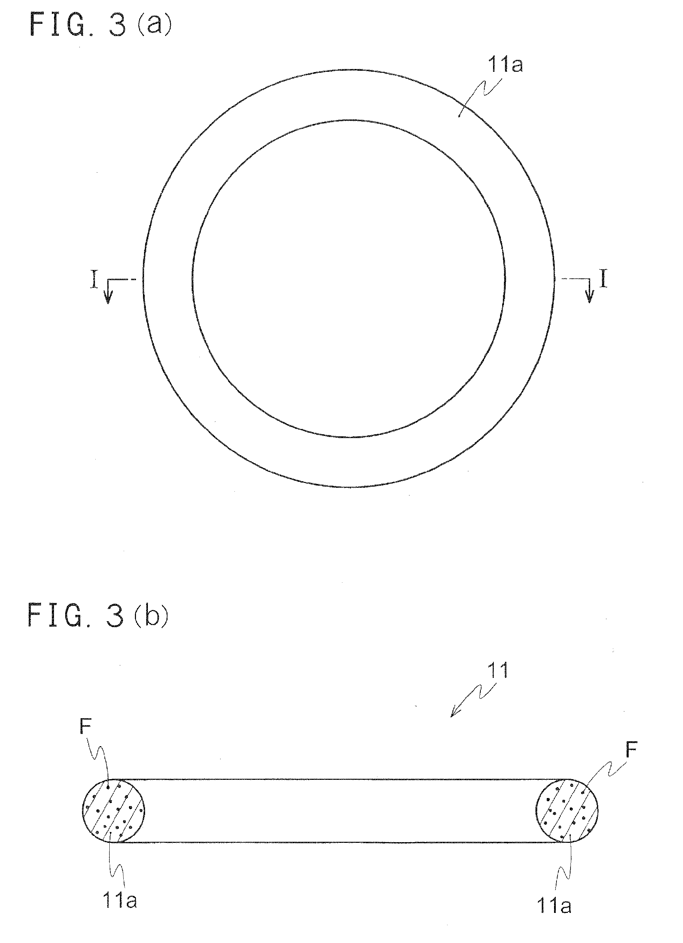

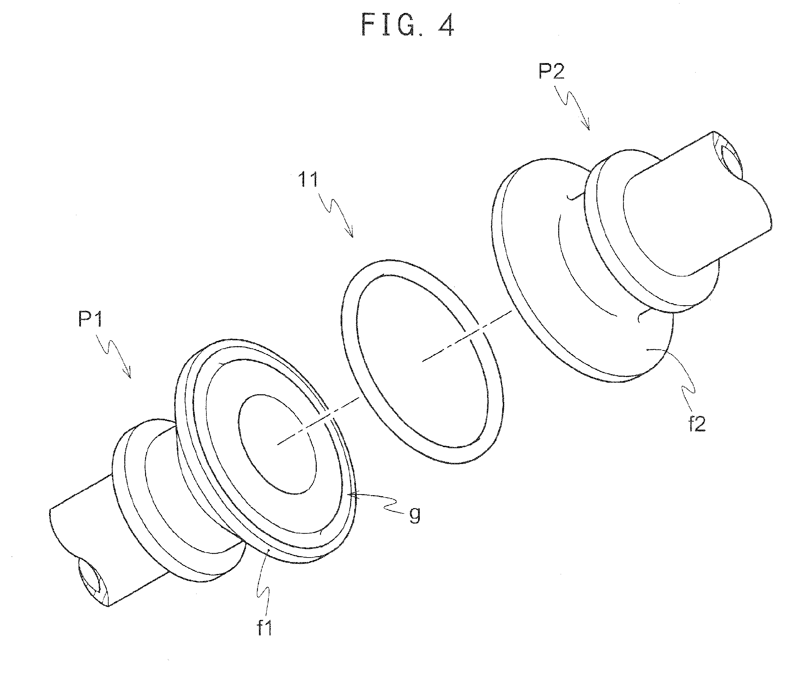

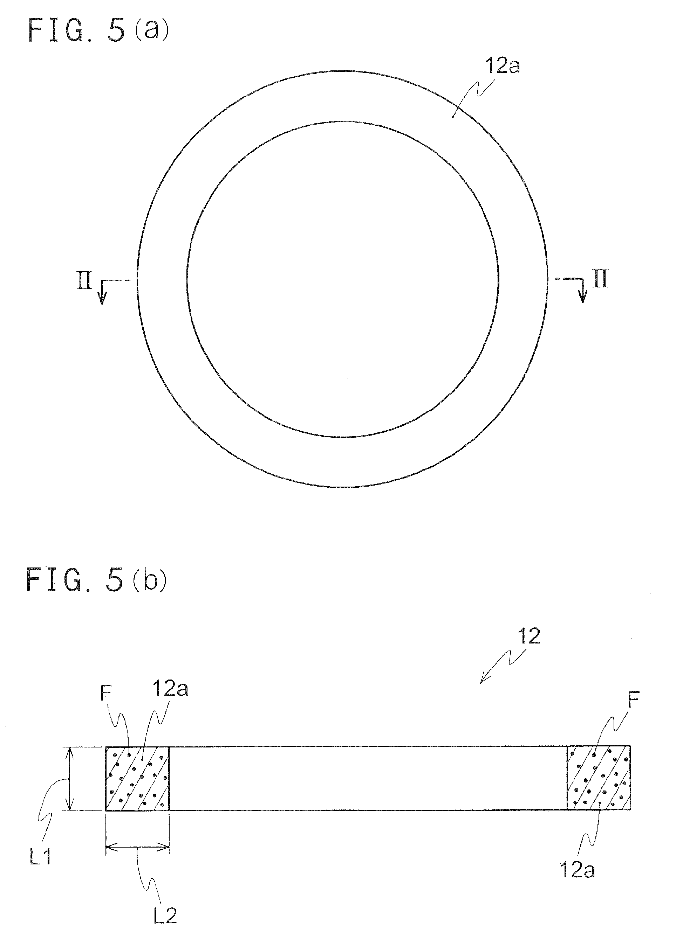

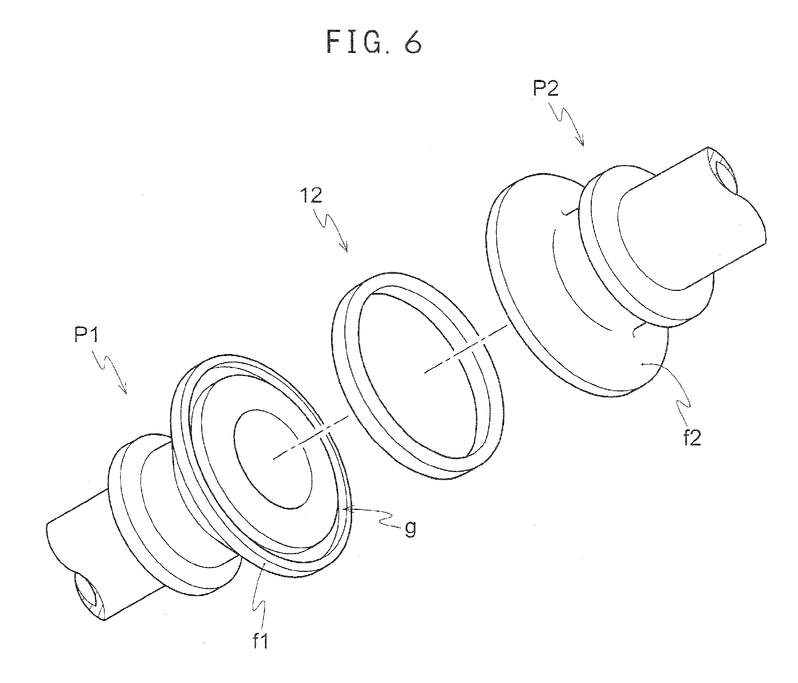

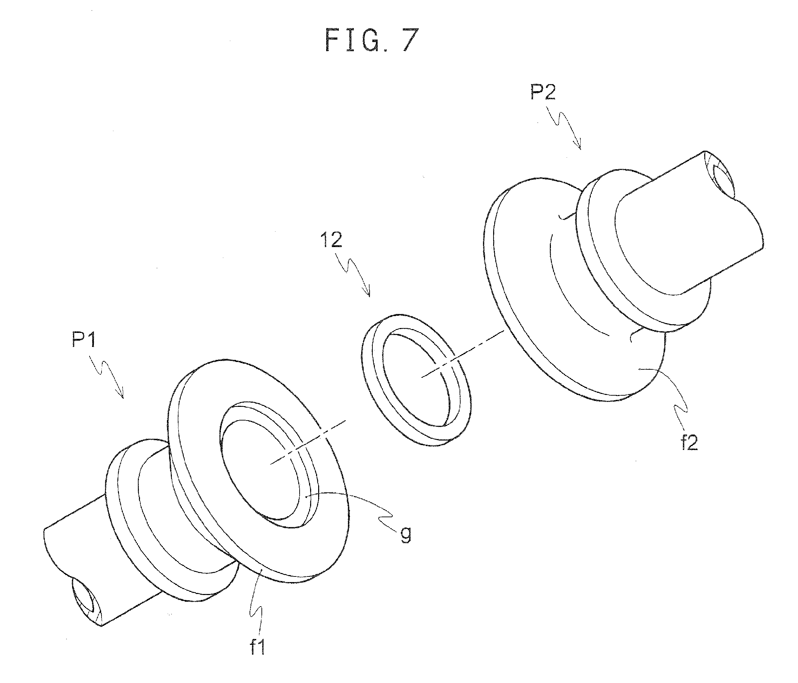

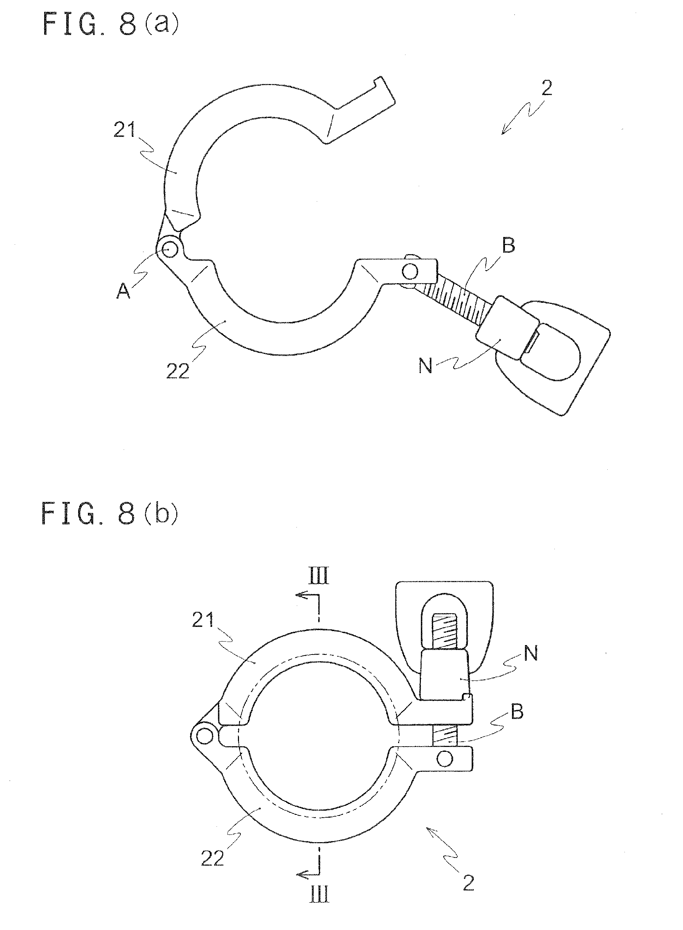

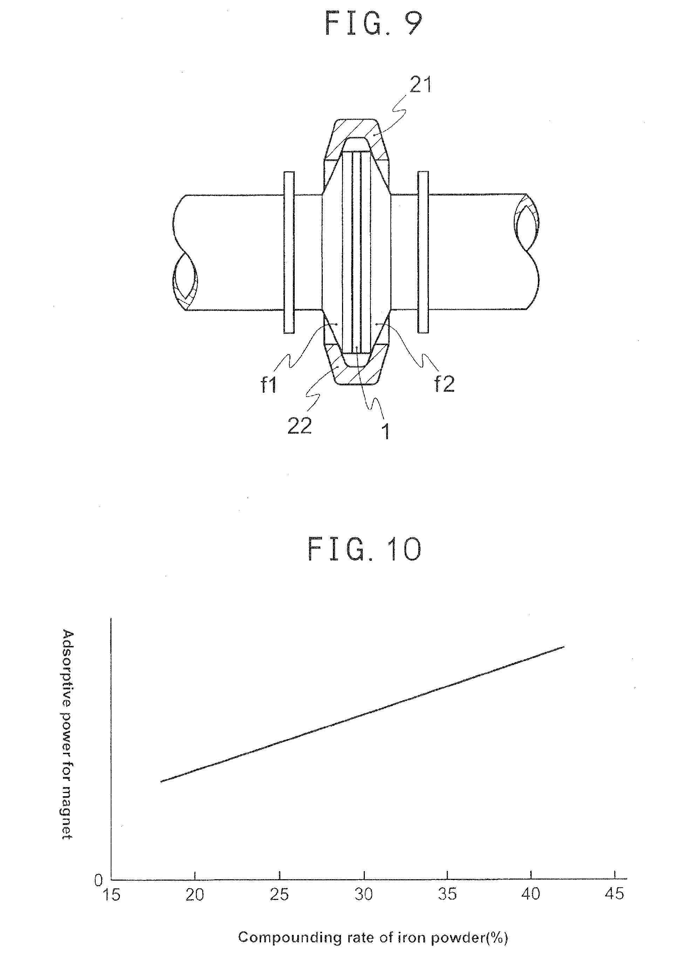

Fig. 1 is a cross sectional explanatory view showing one example of the gasket of the present invention, Fig. 2 is an explanatory view showing a piping joint structure for a food processing plant in which the gasket of Fig. 1 is used, Fig. 3(a) is an explanatory view showing one example of an O-ring of the present invention, and Fig. 3(b) is a cross sectional explanatory view taken along line I-I of Fig. 3(a). Fig. 4 is an explanatory view showing a piping joint structure for a food processing plant in which the O-ring of Fig. 3 is used, Fig. 5(a) is an explanatory view showing one example of the O-ring of the present invention and Fig. 5(b) is a cross sectional explanatory view taken along line II-II of Fig. 5(a). Fig. 6 is an explanatory view showing a piping joint structure for a food processing plant in which the O-ring of Fig. 5 is used, Fig. 7 is an explanatory view showing other piping joint structure for a food processing plant in which the O-ring of Fig. 5 is used, Figs. 8(a) and 8(b) are explanatory views showing joint means of the O-ring of the present invention, Fig. 9 is a cross sectional view for illustrating the joint means of the O-ring of the present invention and Fig. 10 is a view showing a relation between sorbability and an iron powder compounding rate of an EPDM rubber with iron powder.

In Fig. 1, the reference numeral 1 denotes the gasket of the present invention, the reference numeral 1a denotes the O-ring, the reference numerals 1b and 1c denote the ring portion and the reference numeral F denotes black iron oxide powder respectively.

Referring to Fig. 1, the gasket 1 related to the present embodiment is constituted by the O-ring 1a, the ring portion 1b integrally formed with the O-ring 1a along the outer peripheral side of the O-ring 1a and the ring portion 1c integrally formed with the O-ring 1a along the inner peripheral side of the O-ring 1a.

Further, the gasket 1 is constituted by a rubber and the black iron oxide powder F homogeneously mixed in the rubber.

Examples of the rubber material include a silicone rubber, EPDM, IIR, NBR, CR and FR, and as a resin material, PTFE is adopted. Since the gasket of the present invention is used as the sealing material of a food processing plant, rubber materials such as a silicone rubber, EPDM and FR and resin materials such as PTFE are preferably adopted.

As a compounding rate of the black iron oxide powder F to the rubber, 20 to 40 % by weight is adopted.

Since a particle diameter within a range of 0.1 to 1 µm is adopted as the particle diameter of the black iron oxide powder F, the particle diameter is very small; therefore there are advantage in that the powder is easily mixed with the rubber, advantage in that it has acid resistance because of being oxidized and is hardly rusted, and further advantage in that it is superior in magnetization characteristic and is easily magnetized. Commercially available black iron oxide powder can be adopted.

Then, referring to Fig. 2, the piping joint structure for a food processing plant of the present invention is constituted by two adjacent pipings P1 and P2, flange joints f1 and f2 provided at the respective terminal portions of the two adjacent pipings P1 and P2, and the gasket 1 sandwiched between the flange joint f2.

Further, the O-ring 1a of the gasket 1 is fitted in a groove g provided substantially in a circular shape at a surface S facing the flange joints f1 and f2 and the ring portions 1b and 1c are sandwiched by conventionally known joint means such as bolts and nuts (not shown) on the surface facing the flange joints f1 and f2.

Further, when the piping joint structure for a food processing plant shown in Fig. 2 is adopted, it is at least unnecessary to frequently stop the plant and perform maintenance on the pipings and joints. Although the piping system is provided with a strainer (not shown), foreign articles generated by the local disintegration of the gasket 1 are surely captured by a trap because magnetic powder is included in the gasket 1 when the trap (not shown) provided with a magnet is provided in the piping system. Consequently, the contamination of foreign articles in the piping system can be avoided and the contamination of foreign articles in processed foods can be further prevented.

In Fig. 3, the reference numeral 11 denotes the O-ring of the present invention, the reference numeral 11a denotes the ring body and the reference numeral F denotes the black iron oxide powder (Fe₃O₄) respectively.

Referring to Fig. 3, the O-ring 11 related the present embodiment is constituted by the ring body 11a having a circular cross section.

Further, the O-ring 11 is constituted by a rubber or PTFE and the black iron oxide powder homogeneously mixed in the rubber or PTFE.

Examples of the rubber material include a silicone rubber, EPDM, IIR, NBR, CR, FR and additionally an elastomer, and as a resin material, PTFE is adopted. Since the O-ring of the present invention is used as a sealing material of a food processing plant, rubber materials such as a silicone rubber, EPDM and FR and resin materials such as PTFE are preferably adopted.

As the compounding rate of the black iron oxide powder F to the rubber, 20 to 40 % by weight is adopted.

Since a particle diameter within a range of 0.1 to 1 µm is adopted as the particle diameter of the black iron oxide powder F, the particle diameter is very small; therefore there are advantage in that the powder is easily mixed with the rubber, advantage in that it has acid resistance because of being oxidized and is hardly rusted, and further advantage in that it is superior in magnetization characteristic and is easily magnetized. Commercially available black iron oxide powder can be adopted.

Then, referring to Fig. 4, the piping joint structure for a food processing plant of the present invention is constituted by two adjacent pipings P1 and P2, flange joints f1 and f2 provided at the respective terminal portions of the two adjacent pipings P1 and P2, and the O-ring 11 sandwiched between the flange joint f2.

Further, the ring body 11a of the O-ring 11 is fitted in a groove g provided substantially in a circular shape at the surface facing the flange joints f1 and f2 and is sandwiched by conventionally known joint means such as bolts and nuts (not shown).

Further, when the piping joint structure for a food processing plant shown in Fig. 4 is adopted, it is at least unnecessary to frequently stop the plant and perform maintenance on the pipings and joints. Although the piping system is provided with a strainer (not shown), foreign articles generated by the local disintegration of the O-ring 11 are surely captured by a trap because magnetic powder is included in the O-ring 11 when the trap (not shown) provided with a magnet is provided in the piping system. Consequently, the contamination of foreign articles in the piping system can be avoided and the contamination of foreign articles in foods processed can be further prevented.

In Fig. 5, the reference numeral 12 denotes the O-ring of the present invention, the reference numeral 12a denotes the ring body and the reference numeral F denotes the black iron oxide powder (Fe₃O₄) respectively.

Referring to Fig. 5, the O-ring 12 related to the present embodiment is constituted by a ring body 1a having a rectangular cross section. A thickness L1 of the ring body is preferably 2 to 7 mm, a width L2 is preferably 5 to 30 mm and is preferably slightly larger than a dimension (depth and width) of an installation groove g as shown in Fig. 6.

Further, the O-ring 12 is constituted by a rubber or PTFE and black iron oxide powder homogeneously mixed in the rubber or PTFE.

Examples of the rubber material include a silicone rubber, EPDM, IIR, NBR, CR, FR and additionally an elastomer, and as a resin material, PTFE is adopted. Since the O-ring of the present invention is used as a sealing material of a food processing plant, rubber materials such as a silicone rubber, EPDM and FR and resin materials such as PTFE are preferably adopted.

As the compounding rate of the black iron oxide powder F to the rubber, 20 to 40 % by weight is adopted.

Since a particle diameter within a range of 0.1 to 1 µm is adopted as the particle diameter of the black iron oxide powder F, the particle diameter is very small; therefore there are advantage in that the powder is easily mixed with the rubber, advantage in that it has acid resistance because of being oxidized and is hardly rusted, and further advantage in that it is superior in magnetization characteristic and is easily magnetized. Commercially available black iron oxide powder can be adopted.

Then, referring to Fig. 6, the piping joint structure for a food processing plant of the present invention is constituted by two adjacent pipings P1 and P2, flange joints f1 and f2 provided at the respective terminal portions of the two adjacent pipings P1 and P2, and the O-ring 12 sandwiched between the flange joint f2.

Further, the ring body 12a of the O-ring 12 is installed in the groove g provided substantially in a circular shape at the surface facing the flange joints f1 and f2 and having a rectangular cross sectional shape, and is sandwiched by joint means 2 shown in, for example, Figs. 8(a) and 8(b). The joint means 2 of Fig. 8 is coupled so that a first joint portion 21 and a second joint portion 22 can be rotated by a shaft A, and a bolt B is rotatably provided at either of the first joint portion 21 or the second joint portion 22. As shown in Fig. 9, the flange joints f1 and f2 are sandwiched from both sides by the first joint portion 21 and the second joint portion 22, and the gasket 1 or the O-rings 11 and 12 can be firmly sandwiched by the bolt B and a nut N provided at the first joint portion 21 and the second joint portion 22. The joint means 2 of Fig. 8 is only one mode for joining the gasket 1 and the O-rings 11 and 12 and conventionally known means such as other bolts and nuts (not shown) can be also used.

Further, when the piping joint structure for a food processing plant shown in Fig. 6 is adopted, contamination as the foreign articles of the O-ring in pipings caused by the loss and damage of the O-ring at a disassembly washing step carried out every day after work and foreign articles generated by the local disintegration of the O-ring 12 during use are surely captured by a trap when the trap (not shown) provided with a magnet is provided in the piping system because magnetic powder is included in the O-ring 12. Although the piping system is provided with a strainer (not shown), products not including solid articles are frequently produced recently and the mesh of the strainer must be enlarged; therefore the capture of foreign articles is occasionally difficult, but the contamination of foreign articles in the piping system can be avoided by using the O-ring and the contamination of foreign articles in processed foods can be further prevented.

Further, as shown in Fig. 7, according to the O-ring 12 of the present invention, even if the installation groove g is located only at the flange f1 among the flange joints (connection fittings) f1 and f2, there is an advantage in that there can be provided the O-ring applied for the piping joint structure for a food processing plant in which no gap is generated between the O-ring 12 and the connection fitting f1. Further, according to the O-ring 12 of the present invention, no gap is generated at the installation groove g (usually, the installation groove exhibits a rectangular cross section from the viewpoint of the easiness of processing and cost) without being affected by deviations in finishing dimension upon processing of the O-ring and the flange joints f1 and f2 and shrinkage caused by fatigue due to the long term use of the O-ring, and decay caused by generation of a pool portion in the pipings P1 and P2 during no operation of the plant and the contamination of microbes can be prevented.

Referring to Table 1, examples and comparative examples of the O-rings of the present invention are shown below, but the present invention is not limited to the examples.

Physical properties and adsorption distances in the examples and comparative examples were measured by the following methods.
Measurement method of physical properties
Physical properties (hardness, tensile strength, elongation at break and tensile stress at 100 % elongation) were measured by compounding black iron oxide powder with an EPDM rubber (product name: Ferrule gasket, manufacturer: Maruichi Rubber Works Co., Ltd.) and using O-rings with compounding rates for EPDM of 18 %, 20 %, 30 %, 40 % and 42 % respectively.
Hardness (type A durometer hardness) was measured in accordance with JIS K6253, tensile strength (MPa) and elongation at break (%) was measured in accordance with JIS K6251 and tensile stress (MPa) at 100 % elongation was measured in accordance with JIS K6252. Results are shown in Table 1.

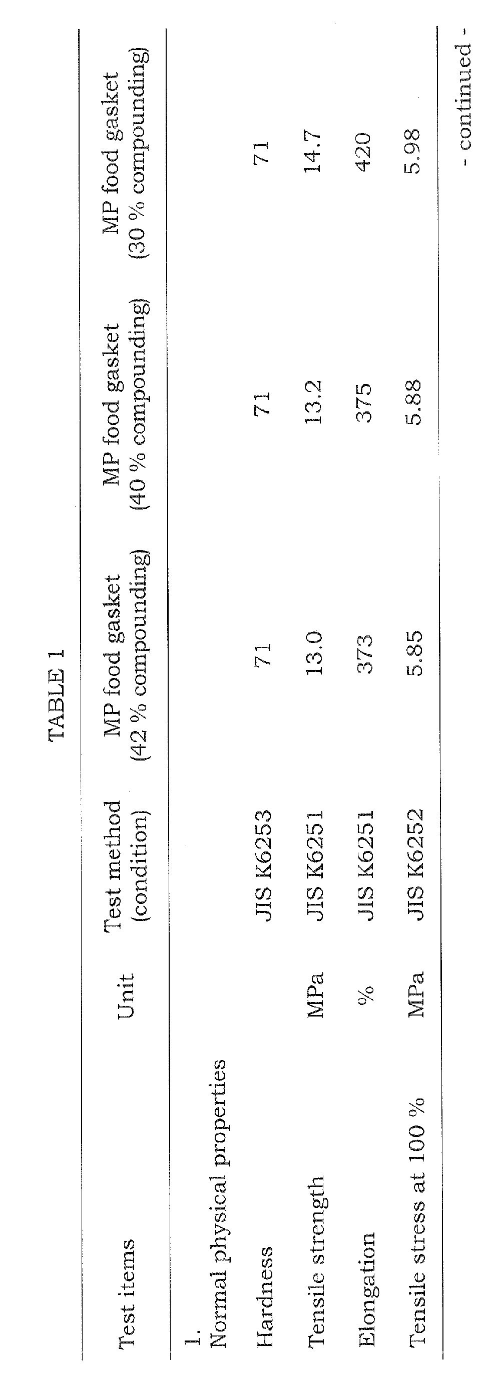

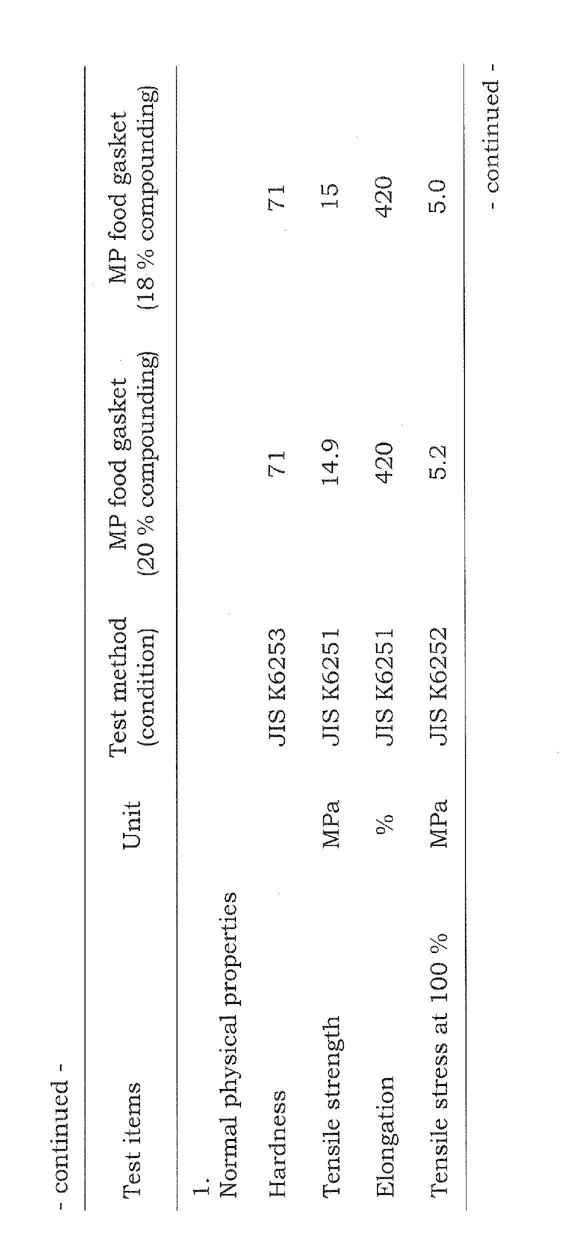

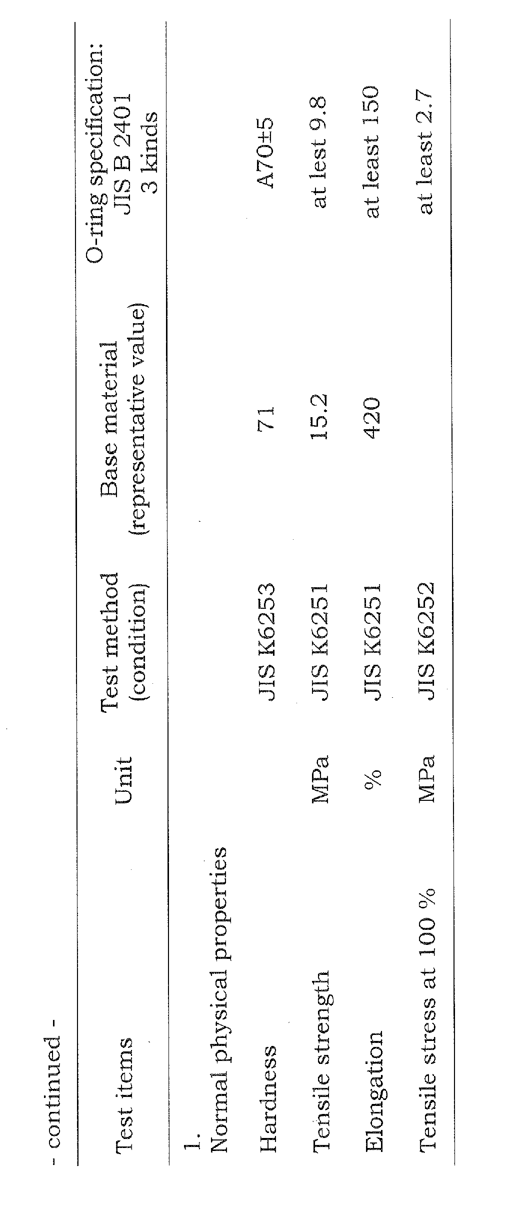

Fig. 10 is a view showing a relation between sorbability and an iron powder compounding rate of an EPDM rubber.

From Table 1 and Fig. 10, when the compounding rate exceeds 40 %, physical properties, particularly tensile strength and elongation are deteriorated and foreign articles are easily contaminated in the piping system. Further, when the compounding rate is lower than 20 %, the sorbability is deteriorated. It has been grasped that the compounding rate of a range of 20 to 40 % is superior in sorbability and the O-ring with high physical properties can be provided.

### INDUSTRIAL APPLICABILITY

According to the present invention, there can be provided a gasket and an O-ring applied for a piping joint for a food processing plant not being a resistance of a fluid flowing in a piping, additionally not provoking clogging of a mesh and ensuring removal of foreign articles associated with local disintegration caused by an aging change (deterioration) of the gasket.

Further, according to the present invention, there can be provided an O-ring applied for a piping joint for a food processing plant not generating a gap between a fitting and the O-ring even if there are deviations in finishing dimension upon processing of the O-ring and a flange, and an installation groove is located only at one side of a connection fitting.

## Claims

1. A gasket for a food processing plant having an O-ring; and ring portions integrally formed with the O-ring along both sides of an inner periphery and an outer periphery of the O-ring, the gasket comprising:
a rubber; and
black iron oxide powder homogeneously mixed in the rubber.

2. The gasket of Claim 1, wherein a compounding rate of the black iron oxide powder to the rubber is 20 to 40 % by weight.

3. The gasket of Claim 1 or 2, wherein a particle diameter of the black iron oxide powder is 0.1 to 1 µm.

4. A piping joint structure for a food processing plant comprising:
two adjacent pipings of at least 2 or 3 pipings;
joints provided at the respective terminal portions of the two adjacent pipings; and
the gaskets of Claim 1, 2 or 3 sandwiched between the joints,
wherein the O-ring of the gaskets is fitted in a groove provided substantially in a circular shape on a facing surface of the joint and the ring portion is sandwiched by the facing surface of the joints.

5. An O-ring for a food processing plant comprising:
a rubber or PTFE; and
black iron oxide powder mixed in the rubber or PTFE.

6. The O-ring for a food processing plant of Claim 5,
wherein a compounding rate of the black iron oxide powder to the rubber or PTFE is 20 to 40 % by weight.

7. The O-ring for a food processing plant of Claim 5 or 6,
wherein a particle diameter of the black iron oxide powder is 0.1 to 1 µm.

8. An O-ring for a food processing plant mixing black iron oxide powder in a ring body comprising a rubber or PTFE,
wherein a cross sectional shape of the ring body exhibits a rectangular shape.

9. The O-ring for a food processing plant of Claim 8,
wherein a compounding rate of the black iron oxide powder to the rubber or PTFE is 20 to 40 % by weight.

10. The O-ring for a food processing plant of Claim 8 or 9,
wherein a particle diameter of the black iron oxide powder is 0.1 to 1 µm.
